Europäisches Patentamt

European Patent Office

Office européen des brevets

(11) Publication number: **0 425 076 A2**

# EUROPEAN PATENT APPLICATION

(21) Application number: 90308085.1

(51) Int. Cl.5: **G02B 6/12**

(22) Date of filing: 24.07.90

(30) Priority: 27.10.89 US 428174

(43) Date of publication of application:
02.05.91 Bulletin 91/18

(84) Designated Contracting States:
DE FR GB IT

(71) Applicant: **LITTON SYSTEMS INC.**
**360 North Crescent Drive**
**Beverly Hills, CA 90210(US)**

(72) Inventor: **Chang, Chin Lung**
**1823 West Lighthall Street**
**West Covina, California 91790(US)**
Inventor: **Niebauer, Daniel A.**
**5422 Quakertown Avenue**
**Woodland Hills, California 91364(US)**
Inventor: **Choi, Albert**
**5565 Canoga Avenue**
**Woodland Hills, California 91367(US)**

(74) Representative: **Rushton, Ronald et al**
**SOMMERVILLE & RUSHTON 11 Holywell Hill**
**St. Albans Hertfordshire AL1 1EZ(GB)**

(54) Process for making intergrated optics chips having high electro-optic coefficients.

(57) Methods for making proton-exchanged, multi-function integrated optics chips, preferably chips based on the stable, rhombohedral lithium niobate structure include the steps of: forming a multifunction integrated optics chip substrate from a substrate such as lithium niobate; affixing a removable mask or mask pattern to at least one surface of the chip to form one or more proton-exchanged patterns of desired size and shape at the surface of the chip; treating the masked chip with a proton-exchanging acid such as benzoic acid at a temperature and for a time sufficient to cause substantial proton exchange at and below the unmasked surface of the chip, but for a time insufficient to create any microcracking or internal stresses that lead to microcracking in the chip; removing the mask or mask pattern from the chip; and thermally annealing the chip, in an oxygen-containing environment, at a temperature and for a time sufficient to diffuse the hydrogen ions at and near the surface of the chip substantially below its surface, and for a time and at a temperature sufficient to restore and to optimize the electro-optic coefficient and to reduce light and propagation losses in the chip.

The chips so formed by this process have substantially diffused protons, are substantially free of microcracking and of internal stresses that can result in microcracking, and yet have optimally high electro-optic coefficients.

FIG. 1

```
LiNbO3 WAFER CLEANING — 1
  | — 2
PHOTO LITHOGRAPH FOR MAKING Y-JUNCTION PATTERNS — 3   | — 4
  PROTON EXCHANGE — 5
  | — 6
PHOTO LITHOGRAPHY FOR MAKING ELECTRODES — 9   | — 8
  THERMAL ANNEALING — 7
  | — 10
DICING & PACKAGING — 11
  | — 12
FINISH — 13
```

# PROCESS FOR MAKING MULTIFUNCTION INTEGRATED OPTICS CHIPS HAVING HIGH ELECTRO-OPTIC COEFFICIENTS

## BACKGROUND OF THE INVENTION

### 1. Field of the Invention

This invention relates to processes for making multifunction integrated optics chips having optimally high electro-optic coefficients, and proton-exchanged, preferably rhombohedral structure, and to the multifunction integrated optics chips resulting from these processes.

### 2. Description of Related Art

Until now, the methods for making multifunction integrated optics chips, particularly such chips made of lithium niobate, have included the step of subjecting the chips to proton exchange with acids such as benzoic acid at temperatures in the range of about 150° C to about 250° C for times of about 10 to about 20 minutes or more. Where the proton exchange step is carried out at higher temperatures or for longer times, or both, the lithium niobate substrates tend to form substantial internal stresses that result in microcracking in the substrate areas exposed to the proton exchange step. As a result, the chips made by processes including this step frequently exhibit refractive index instabilities, high propagation losses, and low electro-optic coefficients.

## SUMMARY OF THE INVENTION

This invention provides methods for making proton-exchanged, multifunction integrated optics chips (MIOCS) that are, in preferred embodiments, based on the stable rhombohedral $Li_{1-x}H_xNbO_3$ structure. These chips have substantially diffused protons, are substantially free of microcracking and of internal stresses that can result in microcracking, and yet have optimally high electro-optic coefficients. These methods are particularly adapted for making such chips from proton-exchanged lithium niobate.

According to the invention there is provided a method for making proton-exchanged integrated optics chips comprising treating a chip substrate with a proton-exchanging acid at a temperature and for a time sufficient to cause substantial proton exchange at and below the surface of said chip substrate, but for a time insufficient to create any microcracking or internal stresses that lead to microcracking in said chip substrate; thermally annealing said chip substrate in the presence of oxygen at a temperature and for a time sufficient to diffuse the hydrogen ions at and near the surface of said chip substrate substantially below the surface of said chip substrate, and for a time and at a temperature sufficient to restore and to optimize the electro-optic coefficient of said chip substrate.

In more detail the method may include the steps of: forming a multifunction integrated optics chip substrate from a substrate adapted for this purpose such as lithium niobate; affixing a removable mask or mask pattern to at least one surface of the chip substrate to form one or more proton-exchanged patterns of desired size and shape at the surface of the chip; treating the masked chip with a proton-exchanging acid such as benzoic acid at a temperature and for a time sufficient to cause substantial proton exchange at and below the unmasked surface of the chip substrate, but for a time insufficient to create any microcracking or internal stresses that lead to microcracking in the chip substrate; removing the mask or mask pattern from the chip substrate; and thermally annealing the chip, in the presence of oxygen, at a temperature and for a time sufficient to diffuse the hydrogen ions at and near the surface of the chip substrate substantially below its surface, and for a time and at a temperature sufficient to restore and to optimize the electro-optic coefficient of the chip substrate.

This invention also relates to multifunction integrated optics chips having a proton-exchanged lithium niobate surface or surface pattern of desired size and shape with the proton-exchanged hydrogen ions substantially diffused into and below the surface of the chip. These chips exhibit the stable rhombohedral structure and the smaller stresses that lead to microcracking and substantially free of microcracking in their proton-exchanged regions. These chips also have restored, optimized electro-optic coefficients substantially equal to the electro-optic coefficients of the chips before proton exchange begins.

In preferred embodiments, the multifunction integrated optics chips are formed of a substance such as lithium niobate. These chips can be of any desired size and shape and thickness. Alternatively, these chips can be made of substances such as $LiTaO_3$ (lithium tantalate).

In preferred embodiments, the wafers to be converted to MIOCS are covered, on one or more of their surfaces, with a mask or masking pattern, such as a mask made of aluminum or chromium metal. These masks preferably include a pattern of sufficient size and shape to form a desired pattern of electro-optic channels in the wafers.

Before or after masking, the lithium niobate wafers are treated with an acid eg benzoic acid that causes proton exchange between the hydrogen ions in the acid and the anions, e.g., lithium ions, in the wafers. The acid treatment takes place at elevated temperature, preferably in the range of about 100° C to about 250° C, and for a time in the range of a few minutes up to as many as 20 or even 30 minutes. The temperatures and times of proton exchange are, in general, sufficient to cause substantial proton exchange in the desired areas of the wafers, but sufficiently short to avoid the creation of stresses that lead to microcracking, or to the formation of microcracks, in the wafer regions exposed to proton exchange.

The proton exchange step is preferably controlled so as to limit the depth of proton exchange below the surface of the wafer to not more than about 5 microns and preferably not more than about 2 microns. To this end, proton exchange time is preferably limited to no more than about 10 minutes up to about 15 minutes. The exchange time should preferably not exceed the time required to convert substantially 100% of the lithium ions to hydrogen ions at the surface of the wafer, and to convert substantially 100% of the lithium ions to hydrogen ions below the surface to a depth of not more than about 5 microns and preferably not more than about 2 microns.

After proton exchange is complete, the mask or masking pattern is removed. Thereafter, the wafer is heat-treated, i.e., thermally annealed, in an environment that contains more oxygen than air normally contains, and preferably in sufficient amounts and at sufficient temperatures and for sufficient times, to diffuse the hydrogen ions, formed at and near the surface of the chip, substantially into and below the surface of the chip. The heat treatment also converts the phase of the wafer, where the wafer is lithium niobate, from Perovskite, an unstable phase, to rhombohedral, a more stable phase.

Preferably, the annealing step is carried out for a time and at a temperature sufficient to reduce the hydrogen concentration at the surface of the wafer from about 100% to a value in the range of about 20% to about 30% and preferably less than about 25%. In broader terms, the annealing step is continued until the electro-optic coefficient of the wafer before proton exchange is substantially recovered, and optical propagation losses caused by proton exchange are reduced or substantially eliminated.

The annealing step is, in some embodiments, carried out for a time sufficient to maximize the coupling between the waveguide in the wafer and the core of an optical fiber to be joined to the waveguide. In such embodiments, the annealing is carried out until the spot size of light emerging from the core of a fiber to be coupled to the waveguide corresponds substantially to the spot size of light passing through and emerging from the waveguide itself. In such embodiments, hydrogen diffusion into the waveguide will penetrate to a depth in the range of about 5 to about 7 microns.

In preferred embodiments, the annealing is carried out by increasing gradually the temperature of the annealing from room temperature, e.g., about 20° C, up to a desired maximum temperature, preferably in the range of about 325° C to about 375° C, over a time period of up to about 30 minutes, but preferably as rapidly as possible. The annealing continues at the maximum temperature for a time sufficient to cause the desired diffusion of hydrogen ions into the wafer and to restore the electro-optic coefficient of the wafer to optimum value, i.e., to a value at or near the value of the wafer before exposure to proton exchange and annealing.

The annealing takes place in a chamber that is substantially impervious to gases and that is exposed to air or oxygen. Preferably, oxygen flows into the annealing chamber at a rate in the range of about 0.1 litres per minute to about 0.4 litres per minute. This oxygen flow is maintained throughout the annealing step.

## BRIEF DESCRIPTION OF THE DRAWINGS

This invention can better be understood by reference to the drawings, in which:

Fig. 1 is a block flow diagram showing a preferred method for making proton-exchanged integrated optics chips;

Fig. 2A and 2B shows the proton-exchanging step of the methods of this invention;

Fig. 2C shows the guiding region formed in a chip by the proton-exchanging step of this method; and

Fig. 3 shows an embodiment of a finished product of the methods of this invention.

## DESCRIPTION OF THE PREFERRED EMBODIMENTS

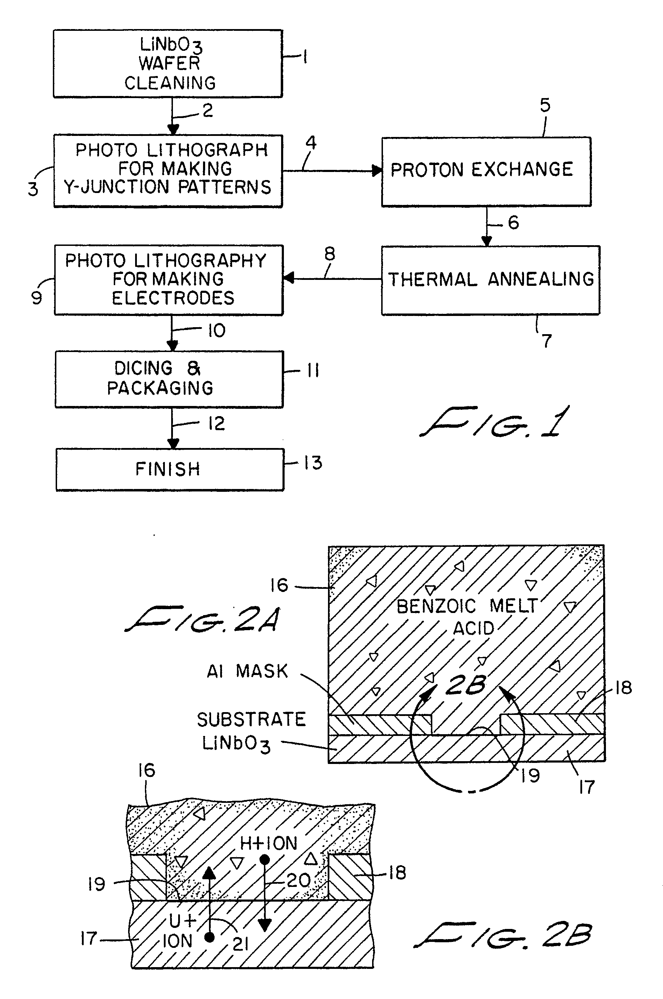

Fig. 1 shows, in block diagram form, a preferred embodiment of the methods of this invention. In this process, a lithium niobate wafer, after cleaning in step 1 passes via path 2 to masking step 3. The masking comprises placing an aluminum mask, by photolithography, on the lithium niobate wafer to form a Y-junction pattern. From masking step 3, the masked lithium niobate wafer passes on path 4 to proton exchange step 5.

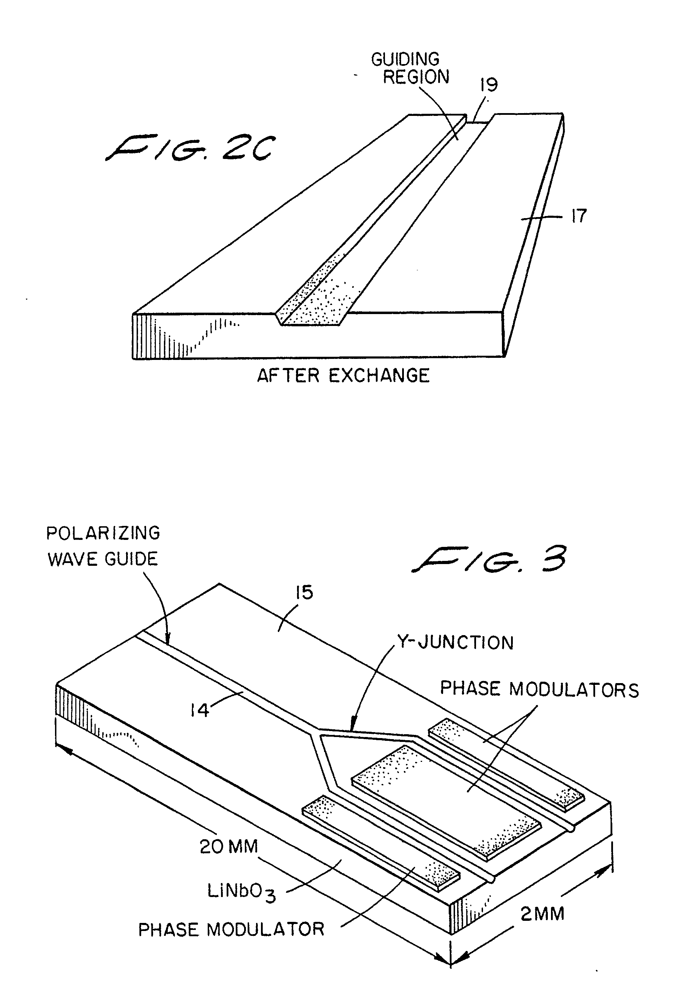

There, as seen in Fig. 2A, the benzoic acid melt 16 impinges on the entire surface of masked wafer 17. However, because mask 18 blocks all portions of the wafer except unmasked area 19, hydrogen ion exchange for lithium ions is confined to area 19, preferably to a depth of about 2 microns below the surface of the wafer in area 19. In area 19, hydrogen ions enter on path 20 and lithium ions leave on path 21. The proton-exchanged wafer 17, after this step, includes proton-exchanged guiding region 19; see Fig. 2B. Thereafter, proton-exchanged, masked lithium niobate wafer 17 passes on path 6 to thermal annealing step 7.

There, the masked substrate is subjected to thermal annealing at a temperature that gradually increases from about 20° C up to a desired maximum that is preferably in the range of about 325° C to about 375° C over a period of up to about 30 minutes, but preferably as quickly as possible. The annealing causes hydrogen ions to diffuse into the wafer in the proton-exchanged area to a depth in the range of about five to about seven microns. At the end of the thermal annealing step, the wafer passes on path 8 to photolithographic step 9 where, using conventional photolithographic processes, electrodes are formed on the substrate. The wafer then passes on path 10 to a dicing and packaging step 11 where the wafer is cut into products of desired size and shape before passing on path 12 to finishing step 13.

Fig. 3 shows a preferred embodiment of a finished product with the hydrogen ion-exchanged, thermally annealed, Y-shaped polarizing waveguide 14 formed on the surface of wafer 15.

## Claims

1. A method for making proton-exchanged integrated optics chips comprising: forming a chip substrate from a substance adapted for this purpose; affixing a removable mask or mask pattern to at least one surface of said chip substrate, said mask or mask pattern having a desired size and shape; treating the masked chip substrate with a proton-exchanging acid at a temperature and for a time sufficient to cause substantial proton exchange at and below the unmasked surface of said chip substrate, but for a time insufficient to create any microcracking or internal stresses that lead to microcracking in said chip substrate; removing said mask or mask pattern from said chip substrate; and thermally annealing said chip substrate, in the presence of oxygen, at a temperature and for a time sufficient to diffuse the hydrogen ions at and near the surface of said chip substrate substantially below the surface of said chip substrate, and for a time and at a temperature sufficient to restore and to optimize the electro-optic coefficient of said chip substrate.

2. The method of claim 1 comprising using a chip substrate comprising lithium niobate as said chip substrate.

3. The method of claim 1 or 2 further comprising using benzoic acid as said proton-exchanging acid.

4. The method of any of claims 1 to 3 wherein said treating takes place at a temperature in the range of about 100° C to about 250° C and for a time of up to about 30 minutes.

5. The method of any preceding claim further comprising carrying out said annealing at a temperature in the range of about 325° to about 375° C.

6. The method of any preceding claim wherein said annealing is carried out in a chamber substantially impermeable to gases and further comprising during said annealing, flowing oxygen into said chamber at a rate in the range of about 0.1 to about 0.4 liters per minute.

7. The method of any preceding claim wherein said annealing is carried out for a time and at a temperature sufficient to restore the electro-optic coefficient of said chip substrate to the value of said electro-optic coefficient before said treating with a proton-exchanging acid.

8. An integrated optics chip having a proton-exchanged structure, and a surface optical pattern of desired size and shape, said chip having proton-exchanged hydrogen ions substantially diffused into and below the surface of said chip; a rhombohedral structure; and a restored optimized electro-optic coefficient substantially equal to the electro-optic coefficient of such a chip before proton exchanging, said chip being substantially free of stresses that lead to microcracking and substantially free of microcracks in the proton-exchanged regions of said chip.

9. The chip of claim 8 wherein said chip is formed of lithium niobate and proton-exchanged lithium niobate.

10. An integrated optics chip having a proton-exchanged structure and a surface pattern of desired size and shape, said chip having proton-exchanged hydrogen or deuterium ions substantially diffused into and below the surface of said chip, said chip being substantially free of stresses that lead to microcracking and substantially free of microcracks in the proton-exchanged regions of said chip.

11. The integrated optics chip of claim 10 further comprising at least one waveguide comprising said proton-exchanged hydrogen or deuterium ions and having a controlled, desired size and shape that is adapted for coupling to a fiber-optic fiber having a core of substantially the same size and shape.

12. A method for making proton-exchanged integrated optics chips comprising treating a chip substrate with a proton-exchanging acid at a temperature and for a time sufficient to cause substantial proton exchange at and below the surface of said chip substrate, but for a time insufficient to create any microcracking or internal stresses that lead to microcracking in said chip substrate; thermally annealing said chip substrate in the presence of oxygen at a temperature and for a time sufficient to diffuse the hydrogen ions at and near the surface of said chip substrate substantially below the surface of said chip substrate, and for a time and at a temperature sufficient to restore and to optimize the electro-optic coefficient of said chip substrate.

13. The method of claim 12 further comprising limiting the time of treating said chip substrate with a proton-exchanging acid so that the depth of proton exchange below the surface of said chip substrate is not greater than about two microns.

14. The method of claim 12 or 13 wherein the time of said annealing is controlled so that the diffusion of hydrogen ions below the surface of said chip substrate penetrates to a depth not greater than about seven microns below the surface of said substrate.

```
┌─────────────────┐
│     LiNbO₃      │
│     WAFER        │─── 1
│    CLEANING      │
└─────────────────┘
         │
         │── 2
         ▼
┌──────────────────────┐         ┌──────────────────────┐
│  PHOTO LITHOGRAPH    │   4     │                      │── 5
│     FOR MAKING       │───────▶│   PROTON EXCHANGE    │
│  Y-JUNCTION PATTERNS │         │                      │
└──────────────────────┘         └──────────────────────┘
   3                                        │
                                            │── 6
                                            ▼
┌──────────────────────┐         ┌──────────────────────┐
│  PHOTO LITHOGRAPHY   │   8     │                      │
│    FOR MAKING        │◀───────│  THERMAL ANNEALING   │
│    ELECTRODES        │         │                      │
└──────────────────────┘         └──────────────────────┘
   9         │                              │
             │── 10                          7
             ▼
┌──────────────────────┐
│     DICING  &        │── 11
│    PACKAGING         │
└──────────────────────┘
             │
             │── 12
             ▼
┌──────────────────────┐
│      FINISH          │── 13
└──────────────────────┘
```

*FIG.1*

*FIG.2A*

AI MASK

SUBSTRATE
LiNbO₃

16

BENZOIC MELT
ACID

2B

18

19

17

*FIG.2B*

16

H + ION

19

20

18

17

U +
ION

21

FIG. 2C

GUIDING REGION

19

17

AFTER EXCHANGE

FIG. 3

POLARIZING WAVE GUIDE

15

14

Y-JUNCTION

PHASE MODULATORS

20 MM

LiNbO$_3$

PHASE MODULATOR

2MM

7